Europäisches Patentamt

(19) European Patent Office

Office européen des brevets

(11) Veröffentlichungsnummer: **0 234 280**
**A1**

(12) **EUROPÄISCHE PATENTANMELDUNG**

(21) Anmeldenummer: **87100850.4**

(22) Anmeldetag: **22.01.87**

(51) Int. Cl.⁴: **G02B 6/34 , G02B 6/42**

(30) Priorität: **31.01.86 DE 3603023**

(43) Veröffentlichungstag der Anmeldung:
**02.09.87 Patentblatt 87/36**

(84) Benannte Vertragsstaaten:
**AT BE CH DE FR GB IT LI**

(71) Anmelder: **Siemens Aktiengesellschaft Berlin
und München
Wittelsbacherplatz 2
D-8000 München 2(DE)**

(72) Erfinder: **Mahlein, Hans F., Dr.
Queristrasse 2
D-8025 Unterhaching(DE)**
Erfinder: **Michel, Herbert
Saleggstrasse 14
D-8000 München 90(DE)**
Erfinder: **Reichelt, Achim, Dipl.-Phys.
Queristrasse 4
D-8025 Unterhaching(DE)**
Erfinder: **Winzer, Gerhard, Dr.
Zugspitzstrasse 10
D-8011 Putzbrunn(DE)**

(54) **Lichtweiche eines Kommunikationssystemes, mit drei Lichtanschlüssen.**

(57) Lichtweiche mit erstem(1A) bidirektrional(1A) und zweiten(2A) und dritten(3A) unidirektionalen Lichtanschluß. Ein quaderförmiger Block(B) weist eine gerade Oberflächen-Rille(G) mit eingebetteter Glasfaser(G) auf, welche einen schräg zur Glasfaserachse liegenden teildurchlässigen Spiegel(2A) in einem wiedergeschlossenen Schnitt(F) durch den Block(B) aufweist. Über dem Schnitt(F) durch die Glasfaser(G) ist auf dem Block(B) die lichtempfindliche Stelle eines Lichtempfangs-Halbleiterbaukörpers(E) befestigt. Die aus dem Block(B) herausgerichtete, senkrecht auf der Spiegelebene(F) stehende Senkrechte(L) weist einen Einfallswinkel w kleiner als 45° auf.

EP 0 234 280 A1

## Lichtweiche eines Kommunikationssystemes, mit drei Lichtanschlüssen

Die Erfindung betrifft eine spezielle optoelektronische, für Multiplex-Demultiplex-Betrieb geeignete Lichtweiche, wie sie vor allem in manchen modernen Breitband-Kommunikationssystemen sogar in sehr hoher Zahl benötigt werden. Die Erfindung betrifft nämlich die im Oberbegriff des Patentanspruches 1 definierte spezielle Lichtweichen-Einheit. Eine derartige Lichtweichen-Einheit ist für sich durch -DE-PS 28 40 602 bekannt. Dort weist die Lichtweichen-Einheit ein Kreissegment als Querschnitt und eine lange, röhrenförmige Metallhülse als Kapsel auf. Dort sind an den drei Lichtanschlüssen neben einem elektrischen Lichtempfangs-Halbleiterbaukörper noch zwei rein optische Anschlüsse angebracht, wobei der Lichtempfangs-Halbleiterbaukörper in der Wandung der Kapsel angebracht ist. Gemäß Spalte 4, Zeile 6 bis 26 beträgt der durch den Spiegel definierte Einfallswinkel 45°, also die Hälfte eines rechten Winkels.

Eigene kritische Untersuchungen an solchen Lichtweichen-Einheiten zeigen, daß sie -zumindest für viele Anwendungsfälle -vor allem in zweifacher Hinsicht entscheidend verbessert werden sollten:

-Die Herstellung des Blockes -auch der Kapsel - und vor allem die Montage dieses Blockes präzise in seiner SOLL-Lage in einer Kapsel, sowie die Fixierung des Lichtempfangs-Halbleiterbaukörpers in Spiegelnähe auf dem Block, solle erheblich vereinfacht werden; sowie

-Störungen (vor allem Echos) der am Lichtempfangs-Halbleiterbaukörper erhaltenen elektrischen Signale, die bei hohen Modulationsfrequenzen des durch die Glasfaser gebildeten Lichtes sehr unangenehm heftig auftreten, sollten auf möglichst elegante, einfache Weise beseitigt werden.

Beide Vorteile zusammen sind eine wichtige Voraussetzung, um diese Lichtweiche z.B. in einem optoelektronischen ISDN-Breitband-Vermittlungssystem als Schnittstelle zwischen einer bidirektional lichtleitenden am ersten Lichtanschluß angeschlossenen Außenglasfaser einerseits und der Elektronik andererseits in hohen Stückzahlen verwenden zu können.

In mancher Hinsicht ähnliche Lichtweichen-Einheiten sind in sehr großer Zahl vorbekannt, vgl. z.B. :

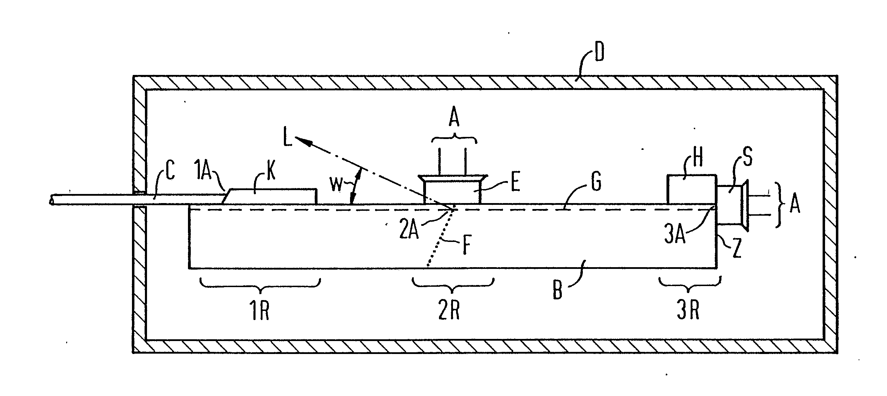

-DE-PS 29 21 035, vor allem Fig. 2;
-Miyauchi et al., in Opt.Lett. 5 (Juli 1980) No. 7, S. 321 bis 322 (521 bis 522?);
-ntz-Archiv 5 (1983) S. 97 bis 99, vor allem Fig. 1 und 2;

-J. of Lightwave Techn., LT-2, No. 4 (Aug. 1984) S. 369 bis 378, vor allem Fig. 1(a) und 6; sowie
-J. of Lightwave Techn., LT-2, No. 5 (Okt. 1984), S. 675 bis 681.

Alle diese bekannten Lichtweichen-Einheiten weisen jeweils eine Kapsel mit rein optischen Baukörpern an den Lichtanschlüssen auf. Bei diesen bekannten Lichtweichen-Einheiten sind nämlich die drei Außenanschlüsse an der Kapsel jeweils nur Außenglasfaser-Anschlüsse, indem dort Licht als Informationenträger im Verbindungsweg des Kommunikationssstems bis zu den peripheren Teilnehmerstationen benützt wird. Ein solcher Betrieb eines Verbindungsweges ist aber oft nicht günstig: Er benötigt einen oft zu hohen feinmechanischen und optisch präzisen Aufwand besonders hinsichtlich der vielen Außenglasfaser-Anschlüsse, und zwar nicht nur an den Informationsanschlüssen der vielen Lichtweichen-Einheiten, sondern auch besonders in den -in einem solchen Kommunikationssystem, besonders in einem öffentlichen Vermittlungssystem, meistens äußerst zahlreichen - Leitungsabschnitten zwischen den Lichtweichen-Einheiten und den oft vielen Tausenden von Teilnehmerstationen. Die Erfindung soll diesen Aufwand zu vermeiden gestatten.

Durch verschiedene Druckschriften ist bekannt, den Spiegel in der Glasfaser bzw. im Block steiler als 45° zu machen, also den Einfallswinkel kleiner als 45° zu machen, um eine besonders gute optische Kopplung mit einer weiteren Glasfaser zu erreichen, deren Achse mit der Achse der eingebetteten Glasfaser einen kleineren Winkel als 90° bildet, vgl. z.B :
-E-A 37 057; sowie
-DE-OS 32 36 149.

Durch die
-ntz 31 (Febr. 1978) Nr. 2, S. 144 bis 146
ist eine Meßanordnung mit Lichtweichen-Einheit zur Fehlerortung in langen Glasfasern bekannt, wobei dort eine kapsellose Lichtweichen-Einheit mit einem rein optischen ersten Glasfaser-Lichtanschluß und mit zwei elektrischen (durch ein Lichtsendeund ein -empfangs-Halbleiterbauelement gebildete) Anschlüsse am zweiten und dritten Lichtanschluß beschrieben sind. Die dort beschriebene Lichtweichen-Einheit ist aber für die Anwendung in großen Kommunikationssystemen zu unhandlich, besonders wenn die vielen Lichtweichen-Einheiten jeweils auf engstem Raum in einem gemeinsamen Schrank unterzubringen sind.

Daneben gibt es eine extrem hohe Vielzahl von weiteren Literaturstellen über den technischen Hintergrund von Lichtweichen-Einheiten und optoelektronischen Kommunikatitonssystemen, vgl.

z.B. :
- DE-PS 28 51 679;
- DE-OS 28 51 696;
- DE-OS 29 O3 288;
- DE-OS 29 18 403;
- DE-PS 30 12 184;
- DE-OS 32 36 149;
- GB-OS 2 020 447;
- US 3 953 727;
- US 4 165 496;
- Appl. Opt. 20 (15. Sept. 1981) No. 18, S. 3128 bis 3135, vor allem Fig. 1, 5 und 9;
- Siemens, Forsch. u. Entw.-Ber. 12 (1983) Nr. 5, S. 332 bis 339, vor allem Fig. 2;
- Fiber and Integr. Opt. 4 (1983) No. 4, S. 339 bis 372, vor allem Fig. 2, 8, 9 und 17;
- 10th European Conf. on Opt. Commun. (ECOC), Stuttgart 3.-6. Sept. 1984/Conf. Proceed. S. 262 bis 263, vor allem Fig. 2;
- SPIE 468 Fibre Optics '84 (Sira) (1984), S. 68 bis 73, vor allem Fig. 4 und 8;
- European Conf. Opt. Commun. (ECOC), Cannes, 21.-24. Sept. 1982/Conf. Proceed. S. 305 bis 314, vor allem Fig. 4 und 7;
- Journeés d' Electronique, Lausanne, 1982/Conf. Proceed. S. 89 bis 111, vor allem Fig. 1(c), 12, 14-(a,b,c) und 19;
- 6th Europan Conf. on Circ. Theories and Design, Stuttgart, 6.-8. Sept. 1983/Conf. Proceed., S. 315 bis 317, vor allem Fig. 6 und 7; sowie
- U.R.S.I., Kleinheubacher Tagung 3.-7. Okt. 1983/Kleinheubacher Berichte Nr. 27, S. 13 bis 29, vor allem Fig. 1 und 5(b).

Über die Herstellung von Lichtweichen-Einheiten, besonders von ihren Blöcken und Spiegeln, sind in einer Vielzahl der bereits genannten Veröffentlichungen detaillierte Hinweise enthalten.

Außerdem sind für sich dem Fachmann Lichtempfänger-Halbleiterbaukörper (z.B. Photodioden) und Lichtsender-Halbleiterbaukörper (z.B. IRED-Dioden) bestens bekannt. Es ist außerdem durch viele Literaturstellen bekannt, daß die Enden von Glasfaser-Lichtleitungen langzeitstabil oft sehr genau auf die optisch aktiven Stellen solcher Halbleiterbaukörper zu richten sind -oft sogar mit extrem engen Toleranzen von ± wenigen μm, manchmal von sogar ± 0,1 μm -, um dort gute optische Koppelungen zu erreichen, vgl. z.B.: -E-A 137 485.

Die Aufgabe der Erfindung ist also, eine -z.B. für die Multiplex-Demultiplex-Anwendung -in vielen solchen Kommunikationssystemen möglichst vorteilhafte aufwandsarme kompakte, leicht handhabbare Lösung zu bieten, welche nämlich
- mindestens einen elektrischen Anschluß am zweiten Lichtanschluß aufweist, welcher gestattet, die Lichtweiche über elektrische Ströme als Informationsträger, z.B. mittels Koaxialkabeln, mit einer die elektrischen Signale empfangenden Teilnehmerstation zu verbinden;
- echoartige Störungen stark verringert, welche durch Lichtreflexion an der Oberfläche des Lichtempfangs-Halbleiterbauelementes auftreten können, indem das dort reflektiete Licht möglichst nicht mehr über den Spiegel zurück in die Glasfaser reflektiert werden soll,
- besonders wenig Aufwand zur Herstellung der Lichtweichen-Einheit selber erfordert;
- wenig feinmechanischen und optischen Aufwand erfordert, auch hinsichtlich Glasfasersteckern und Justierungen und Montage in einer Kapsel;
- zumindest am zweiten und dritten Lichtanschluß jeweils aus dem Block hervorstehende, stoßempfindliche, schwer justierbare und platzaufwendige Glasfaserbereiche -sogenannte Pigtails - vermeidet; und
- eine gute optische Kopplung aus dem Block heraus nach außen an allen Lichtanschlüssen des Blockes gestattet.

Diese Aufgabe wird durch die im Patentanspruch 1 genannten Maßnahmen gelöst.

Bei der Erfindung erfordert die Anbringung der eingebetteten -einzigen! -Glasfaser in der Blockoberfläche besonders wenig Aufwand. Die Herstellung des ebene Oberflächen aufweisenden Blockes, sowie die Befestigung der Glasfaser in der Rille, sowie die Herstellung des entsprechend geneigten Spiegels ist hierbei jeweils in für sich bekannter Weise möglich.

Ferner wird mindestens der zweite Lichtanschluß als ein möglichst reflexionsarmer, langzeitstabil optisch gut angekoppelter, leicht justierbarer und leicht handhabbarer optoelektronischer Anschluß ausgebildet, wobei die optisch sensitive Stelle des dortigen Lichtempfangs-Halbleiterbaukörpers -z.B. eines Photodiodengehäuses oder eines Phototransistorgehäuses -unmittelbar auf dem Block über dem Spiegel der Glasfaser besonders aufwandsarm befestigt, z.B. möglichst spaltfrei angeklebt, wird. Es hatte sich nämlich gezeigt, daß die echoartigen Störungen durch Reflexionen an der Oberfläche des Lichtempfangs-Halbleiterbaukörpers hervorgerufen werden. Zur Unterdrückung der echoauslösenden Reflexionen an der Oberfläche des Lichtempfängers-Halbleiterbaukörpers wird daher der Einfallswinkel kleiner als 45° gemacht, obwohl die Oberfläche des Lichtempfangs-Halbleiterbauelementes parallel zur Glasfaserachse liegt; -gerade dadurch werden jene Reflexionen an dieser Oberfläche kaum oder nicht mehr über den Spiegel in die Glasfaser zurück gespiegelt. Die Erfindung nutzt hierbei auch den Umstand aus, daß Licht, welches mehr oder weniger schief statt senkrecht auf die Oberfläche des Lichtempfangs-Halbleiterkörpers fällt, von diesem Baukörper ebenfalls mit meistens sogar recht gutem Wirkungsgrad in ein elektrisches Signal umgewandelt wird.

Bei Bedarf kann man zusätzlich zur weiteren Unterdrückung solcher störenden Reflexionen noch ein allein den ersten Lichtwellenlängenbereich nicht sperrendes Lichtwellenlän genfilter -wie eine optische Vergütungsschicht auf einer Linse -zwischen dem Block und dem Lichtempfangs-Halbleiterkörper einfügen.

Auch durch die Quaderform des Blockes ist sowohl die Montage der Lichtweichen-Bestandteile zu der erfindungsgemäßen Einheit, als auch bei Bedarf die Montage dieser Lichtweichen-Einheit in einer Kapsel stark erleichtert, wobei diese Kapsel einen sehr einfachen Aufbau, z.B. eine einfache Form wie eine Schachtel, aufweisen kann.

Für die langzeitstabile Befestigung des Lichtempfangs-Halbleiterbaukörpers am fertig hergestellten, die Glasfaser und den Spiegel aufweisenden Block gibt es mehrere Möglichkeiten. Z.B. kann man zuerst den Block für sich in einer Kapsel befestigen, z.B. festklemmen oder ankleben, und einen in der Kapsel verschiebbaren, justierfähigen Sockel, an welchem der betreffende Halbleiter-Baukörper befestigt wird, anbringen, wonach der Halbleiter-Baukörper am Lichtanschluß justiert und, an den Block gedrückt, endgültig befestigt wird, z.B. durch Arretieren des justierten Sokkels.

Man kann ferner -zusätzlich zur Befestigung mittels solcher Sockel oder anstelle einer solchen Befestigung mittels Sockel -den Halbleiter-Baukörper selber bei seiner Justierung, z.B. luftspaltfrei, am Block ankleben bzw. ankitten, statt ihn nur anzudrücken. Dann ist die Befestigung besonders gut gegen Stöße und Vibrationen gesichert, also hinsichtlich der Güte ihrer dortigen optischen Kopplung besonders langzeitstabil gesichert.

Man kann überdies die Lichtweichen-Einheit auch in der Weise montieren, daß man zuerst den Lichtempfangs-Halbleiterbaukörper am Block, der - schon die Glasfaser und den Spiegel enthält, befestigt, z.B. durch Kleben, Kitten und/oder Klem men, und daß man erst danach bei Bedarf die in dieser Weise fertige Lichtweichen-Einheit in einer Kapsel befestigt, soweit man nicht sogar vorzieht, überhaupt keine Kapsel zu benützen.

Man kann überdies häufig ein eigenes Gehäuse für den Lichtempfangs-Halbleiterbaukörper weglassen, ohne unzulässig starke Hochfrequenz-Kopplungen zu erhalten, besonders wenn die ganze Lichtweiche gemeinsam mit ihrem Lichtempfangs-Halbleiterbaukörper mit einer elektrisch leitenden, also elektrische Hochfrequenzschwingungen abschirmenden Kapsel umgeben wird. Dann ist also, mit besonders wenig Aufwand, in der Kapsel der betreffende nackte, gehäuselose

-vielleicht nur durch Lack geschützte - Lichtempfangs-Halbleiterbaukörper auf den zweiten Lichtanschluß des Blockes gelegt und dort in dieser Lage befestigt, z.B. angeklebt.

Die in den Unteransprüchen genannten zusätzlichen Maßnahmen gestatten, zusätzliche Vorteile zu erreichen. So gestatten die Maßnahmen gemäß Patentanspruch

2, eine gewisse Optimierung zu erreichen, bei welcher die Reflexionen an der Oberfläche des Lichtempfangs-Halbleiterbaukörpers entsprechend verringert sind und bei welcher Licht in elektrische Signale im Lichtempfangs-Halbleiterbaukörper trotz des gewählten Einfallwinkels noch mit gutem Wirkungsgrad umgewandelt wird;

3, die störenden Reflexionen von Licht des ersten Lichtwellenlängenbereiches an der Oberfläche des Lichtempfangs-Halbleiterbaukörpers weiter zu verringern,

4, die Lichtweichen-Einheit unmittelbar als Gabel zwischen einer rein optisch bidirektional betriebenen Außenglasfaser zwei unidirektional betriebenen optoelektronischen Halbleiterbaukörpern des Kommunikationssystemes zu betreiben,

5, eine besonders stabile stoßsichere Befestigung des Lichtsende-Halbleiterbaukörpers am Block zu erreichen,

6, nach der fertigen Herstellung der Lichtweichen-Einheit nachträglich in einfacher Weise eine gute optische Kopplung zwischen einer Außenglasfaser und dem ersten Lichtanschluß zu ermöglichen,

8, eine einfache, prismenlose optische Kopplung zwischen einer Außenglasfaser und der in dem Block eingebetteten Glasfaser zu erreichen, sowie

9, einen Schutz der Lichtweichen-Einheit gegen Beschädigung, sowie gegen optische -und bei Bedarf auch elektrische -Kopplungen zu beliebigen, nicht anzukoppelnden Baukörpern der Umgebung zu erreichen.

Die Erfindung und ihre Weiterbildungen werden zur noch besseren Veranschaulichung anhand des in der Figur gezeigten Schemas eines Beispiels für ein optoelektronisches ISDN-Vermittlungssystem weiter erläutert. Hierbei zeigt die Figur ein Beispiel, bei welchem zwei Halbleiterbaukörper E,S an den Block B geklebt sind, nämlich der Lichtempfangs-Halbleiterbaukörper E, welcher Licht des ersten Lichtwellenlängenbereiches in elektrische Signale, die an seinen Anschlüssen A auftreten, umwandelt, sowie ein· Lichtsende-Halbleiterbaukörper S, welcher Licht des zweiten Lichtwellenlängenbereiches durch die eingebettete Glasfaser G sendet, sobald seinen Anschlüssen A entsprechende elektrische Signale zugeleitet werden.

Die Figur zeigt ferner den ersten Lichtanschluß 1A, welcher optisch bidirektional betrieben wird, sowie den zweiten und den dritten Lichtanschluß 2A, 3A, welcher jeweils optoelektronisch und unidirektional betrieben werden.

Der massive, z.B. im wesentlichen aus Glas oder aus einem Halbleiter bestehende Block B weist längs seiner Oberfläche eine gerade Rille G auf, in welche eine Glasfaser mit drei Glasfaserbereichen 1R, 2R, 3R als Lichtleitung eingebettet, z.B. eingekittet, ist. Die Rille G ist im ge gezeigten Beispiel etwa gleich tief wie die Glasfaser dick ist - sowohl die Rille G als auch die Glasfaser sind dabei so dünn, daß bei den in der Figur gezeigten Schema kein Unterschied mehr zwischen der Rille G und der Glasfaser G gemacht wird.

Der erste Lichtanschluß 1A ist an den ersten Glasfaserbereich 1R und der dritte Lichtanschluß 3A an den dritten Glasfaserbereich 3A optisch angekoppelt. Ferner weist die eingebettete Glasfaser G in dem zwischen dem ersten Glasfaserbereich 1R und dem dritten Glasfaserbereich 3R liegenden zweiten Glasfaserbereich 2R einen schräg zur Glasfaserachse liegenden Spiegel 2A als zweiten Lichtanschluß 2A auf, so daß die aus dem Block B herausgerichtete, senkrecht auf der Spiegelebene F stehende Senkrechte L einen spitzen Einfallswinkel w mit der benachbarten, zum ersten Lichtanschluß 1A gerichteten Glasfaserachse aufweist. Hierzu wurden der Block B zusammen mit der eingebetteten Glasfaser G entsprechend dem gewählten Einfallswinkel w in der Ebene F durchtrennt, die Fläche F entsprechend verspiegelt und die Blockteile wieder zu dem in der Figur gezeigten Block B zusammengefügt, z.B. zusammengeklebt.

Im zweiten Glasfaserbereich 2R ist auf dem Block B, nämlich nahe über dem zweiten Lichtanschluß 2A, die lichtempfindliche Stelle des Lichtempfangs-Halbleierbaukörpers E befestigt, und zwar -besonders aufwandsarm - ohne Einfügung einer zusätzlichen Glasfaser mit einer Glasfaserachsenrichtung vom Spiegel 2A der Glasfaser G zur lichtempfindlichen Stelle.

Als Spiegel 2A/F ist in den Block B z.B. ein Lichtwellenlängenfilter F, z.B. eine entsprechende aufgedampfte Vielfachschicht F, eingefügt. Dieses Filter F spiegelt selektiv das vom ersten Lichtanschluß 1A kommende Licht des ersten Lichtwellenlängenbereiches weitgehend aus der Glasfaser G heraus in die lichtempfindliche Stelle des Lichtempfangs-Halbleiterbaukörpers E hinein, wobei aber das Filter F das vom dritten Lichtanschluß 3A kommende Licht eines zweiten, abweichenden Lichtwellenlängenbereichs zum ersten Lichtanschluß 1A zumindest weitgehend durchläßt.

Die Rille G ist in einer ebenen Block-Oberfläche des hier quaderförmigen Blockes B angebracht. Der Block B und seine Rille G sind daher, wie bereits angegeben, besonders leicht herstellbar und überdies ist auch der Block B wegen seiner einfachen Quaderform leicht in solider Weise befestigbar, z.B. auf einer ebenen Innenfläche einer - schachtelförmigen Kapsel D.

Der Spiegel F ist so orientiert im Block B angebracht, daß der Einfallswinkel w kleiner als 45° ist, daß also das vom Spiegel F aus der Glasfaser G herausgespiegelte Licht, wie bereits erwähnt, nicht senkrecht sondern schief auf die Oberfläche des Lichtempfangs-Halbleiterbaukörpers E fällt. Dadurch wird, wie ebenfalls bereits erwähnt, eine echoartige Störung durch Reflektieren dieses Lichtes von dieser Oberfläche zurück über den Spiegel F zum ersten Lichtanschluß 1A weitgehend unterdrückt. Weil außerdem der Lichtempfangs-Halbleiterbaukörper E weiterhin einen guten Wirkungsgrad für die Umwandlung des empfangenen Lichtes in elektrische Signale trotz des für ihn schiefen Lichteinfalles -bei nicht gar zu extrem schiefem Lichteinfall -aufweist, ist trotz der weitgehenden Unterdrückung der echoauslösenden Reflexionen die Funktiontüchtigkeit dieses Baukörpers E noch ausreichend geblieben. Der optimale Einfallwinkel w ist je nach Art des Baukörpers E verschieden und leicht durch Versuche feststellbar; -er beträgt z.B. ca. 35°. Außerdem kann durch eine derartige Wahl des Einfallswinkels die Flanke der Filtercharakteristik erheblich steiler als bei einem Spiegel F mit einem 45°-Einfallswinkel gemacht werden.

Zur noch besseren Unterdrückung der störenden Reflexionen kann ein Lichtwellenlängenfilter, welches Licht des ersten Lichtwellenlängenbereiches möglichst wenig und Licht des zweiten Lichtwellenlängenbereiches möglichst stark dämpft und/oder reflektiert, im zweiten Glasfaserbereich 2R zwischen der Glasfaseroberfläche und dem Lichtempfangs-Halbleiterbaukörper E eingefügt werden.

Am dritten Lichtanschluß 3A, welcher durch ein stumpfes, mit einer benachbarten Blockoberfläche Z fluchtendes Ende 3A des dritten Glasfaserbereiches 3R gebildet ist, kann z.B. die lichtsendefähige Stelle eines Lichtsende-Halbleiterbaukörpers S, z.B. eines GaAs-Lasers S, befestigt werden, und zwar auch hier wieder aufwandsarm ohne Einfügung einer zusätzlichen Glasfaser mit einer Glasfaserachsenrichtung zwischen dem Block B und der lichtsendefähigen Stelle.

Im dritten Glasfaserbereich 3R kann auf dem Block B über der Rille G ein fester Abdeckbalken H befestigt werden, dessen zum Lichtsende-Halbleiterbaukörper S gerichtete ebene Seitenfläche mit der zu diesem Lichtsende-Halbleiterbaukörper S gerichteten Blockoberfläche Z fluchtet. Dadurch ist dieser Baukörper S dort besonders leicht und solide justierbar und befestigbar.

Im ersten Glasfaserbereich 1R kann auf der Rille G in für sich bekannter Weise ein Prisma K zur Erleichterung der Auskopplung von Licht aus dem ersten Glasfaserbereich 1R und zur Erleichterung der Einkopplung von Licht in den ersten Glasfaserbereich 1R befestigt werden. Der erste Lichtanschluß 1A kann dann optisch mit wenig Aufwand an das Ende einer Außenglasfaser C angekoppelt werden, deren Glasfaserachse zur Glasfaserachse der eingebetteten Glasfaser G in unmittelbarer Blocknähe zumindest weitgehend parallel liegt.

Die Glasfaserachse der Außenglasfaser C kann sogar mit der Glasfaserachse der eingebetteten Glasfaser G fluchten, wenn die eingebettete Glasfaser G spaltfrei in die hinsichtlich ihrer Glasfaserachse fluchtende Außenglasfaser C übergeht. Bei dieser Variante der Erfindung besteht also die eingebettete Glasfaser G und die dazu fluchtende Außenglasfaser C aus einer durchgehenden, einzigen Glasfaser G/C. Dann kann man auch auf das Prisma K verzichten.

Zumindest der Block B, wenn nicht auch zumindest ein Teil der Halbleiterbaukörper E,S, kann, wie bereits mehrfach angegeben wurde, in einer - zumindest weitgehend -lichtdichten Kapsel D eingeschlossen werden. Wenn diese Kapsel D überdies aus elektrisch leitendem Material besteht, können störende elektrische Hochfrequenzkopplungen zwischen einerseits den Baukörpern E,S und andererseits außen angebrachten weiteren elektrischen Bauteilen entsprechend vermieden werden.

Bezugszeichenliste

A    (elektrische) Halbleiterbaukörper-Anschlüsse
B   Block
C   Außenglasfaser
D   Kapsel
E   Lichtempfangs-Halbleiterbaukkörper
F   Spiegel(ebene), Lichtwellenlängenfilter
G   Rille, Glasfaser (Lichtleitung)
H   Abdeckbalken
K   Prisma
L   Senkrechte
S   Lichtsende-Halbleiterbaukörper,
w   Einfallswinkel
Z   Blockoberfläche
1A   erster Lichtanschluß
2A   zweiter Lichtanschluß
3A   dritter Lichtanschluß
1R   erster Glasfaserbereich
2R   zweiter Glasfaserbereich
3R   dritter Glasfaserbereich

## Ansprüche

1. Lichtweiche eines Kommunikationssystems, wobei
-ein erster Lichtanschluß(1A) bidirektional und ein zweiter und ein dritter Lichtanschluß(2A, 3A) jeweils unidirektional betrieben werden,
-ein massiver, z.B. im wesentlichen aus Glas bestehender, Block(B) längs seiner Oberfläche eine gerade Rille(G) aufweist, in welche eine Glasfaser(G) mit drei Glasfaserbereichen(1R, 2R, 3R) als Lichtleitung(G) eingebettet, z.B. eingekittet, ist,
-der erste Lichtanschluß(1A) an den ersten Glasfaserbereich(1R) und der dritte Lichtanschluß(3A) an den dritten Glasfaserbereich(3A) optisch angekoppelt ist,
-die eingebettete Glasfaser(G) in einem zwischen dem ersten und dem dritten Glasfaserbereich(1R - 3R) liegenden zweiten Glasfaserbereich(2R) einen - schräg zur Glasfaserachse liegenden teildurchlässigen Spiegel(2A), der in einem wiedergeschlossenen Schnitt(F) durch den Block(B) liegt, als zweiten Lichtanschluß(2A) aufweist, wobei die aus dem Block(B) herausgerichtete, senkrecht auf der Spiegelebene(F) stehende Senkrechte(L) einen spitzen Einfallswinkel(w) mit der benachbarten, zum ersten Lichtanschluß(1A) gerichteten Glasfaserachse aufweist,
-im zweiten Glasfaserbereich(2R) auf dem Block(B), nämlich nahe beim zweiten Lichtanschluß(2A), die lichtempfindliche Stelle eines Lichtempfangs-Halbleiterbaukörpers(E), ohne Einfügung einer zusätzlichen Glasfaser mit einer Glasfaserachsenrichtung vom Spalt(2A) zur lichtempfindlichen Stelle, befestigt ist,
-als Spiegel(2A, F) bevorzugt ein Lichtwellenlängenfilter, z.B. eine entsprechende aufgedampfte Schicht(F), eingefügt ist, welches das vom ersten Lichtanschluß(1A) kommende Licht eines ersten Lichtwellenlängenbereiches aus der Glasfaser(G) heraus in die lichtempfindliche Stelle des Lichtempfangs-Halbleiterbaukörpers(E) hinein spiegelt, aber vom dritten Lichtanschluß(3A) kommendes Licht eines zweiten Lichtwellenlängenbereiches zum ersten Lichtanschluß(1A) zumindest weitgehend durchläßt,
z.B. für die optoelektronische Schnittstelle eines öffentlichen ISDN-Vermittlungssystemes,
**dadurch gekennzeichnet**, daß
-die Rille(G) in einer ebenen Block-Oberfläche eines mehr oder weniger quaderförmigen Blockes(B) angebracht ist, und
-der Einfallswinkel(w) kleiner als 45° ist.

2. Lichtweiche nach Patentanspruch 1,
**dadurch gekennzeichnet**, daß
-der Einfallswinkel(w) ca 35° beträgt.

3. Lichtweiche nach Patentanspruch 1 oder 2,
**dadurch gekennzeichnet**, daß
-ein Außen-Lichtwellenlängenfilter, welches Licht der ersten Lichtwellenlängenbereiches möglichst wenig und Licht des zweiten Lichtwellenlängenbereiches möglichst stark dämpft und/oder reflektiert, im zweiten Glasfaserbereich(2R) zwischen der Glasfaseroberfläche und dem Lichtempfangs-Halbleiterbaukörper(E) eingefügt ist.

4. Lichtweiche nach einem der vorhergehenden Patentansprüche,
**dadurch gekennzeichnet**, daß
-am dritten Lichtanschluß(3A), welcher durch ein stumpfes, mit einer benachbarten Blockoberfläche(Z) fluchtendes Ende(3A) des dritten Glasfaserbereiches(3R) gebildet ist, die lichtsendefähige Stelle eines Lichtsende-Halbleiterbaukörpers(S), ohne Einfügung einer zusätzlichen Glasfaser mit einer Glasfaserachsenrichtung zwischen dem Block(B) und der lichtsendefähigen Stelle, befestigt ist.

5. Lichtweiche nach Patentanspruch 4,
**dadurch gekennzeichnet**, daß
-im dritten Glasfaserbereich(3R) auf dem Block(B) über der Rille(G) ein fester Abdeckbalken(H) befestigt ist, dessen zum Lichtsende-Halbleiterbaukörper(S) gerichtete ebene Seitenfläche mit der zu diesem Lichtsende-Halbleiterbaukörper(S) gerichteten Blockoberfläche(Z) fluchtet.

6. Lichtweiche nach einem der vorhergehenden Patentansprüche,
**dadurch gekennzeichnet**, daß
-im ersten Glasfaserbereich(1R) auf der Rille(G) ein Prisma(K) zur Auskopplung von Licht aus dem ersten Glasfaserbereich(1R) und zur Einkopplung von Licht in den ersten Glasfaserbereich(1R) befestigt ist.

7. Lichtweiche nach einem der vorhergehenden Patentansprüche,
**dadurch gekennzeichnet** , daß
-der erste Lichtanschluß(1A) optisch an das Ende einer Außenglasfaser(C) angekopppelt ist, deren Glasfaserachse zur Glasfaserachse der eingebetteten Glasfaser(G) in unmittelbarer Blocknähe zumindest parallel liegt, wenn nicht sogar fluchtet.

8. Lichtweiche nach Patentanspruch 7,
**dadurch gekennzeichnet**, daß
-die eingebettete Glasfaser(G) spaltfrei in die hinsichtlich ihrer Glasfaserachse fluchtende Außenglasfaser(C) übergeht.

9. Lichtweiche nach einem der vorhergehenden Patentansprüche,
**dadurch gekennzeichnet**, daß
-zumindest ihr Block(B) wenn nicht auch zumindest ein Teil ihrer Halbleiterbaukörper(E, S) in einer - zumindest weitgehend -lichtdichten Kapsel(D) eingeschlossen sind.

0 234 280

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| Y | FR-A-2 549 243 (COMPAGNIE LYONNAISE DE TRANSMISSIONS OPTIQUES S.A.) * Seite 2, Zeilen 1-12; Figuren 2,5,6,8 * | 1-4 | G 02 B 6/34<br>G 02 B 6/42 |
| A | | 5-9 | |
| | --- | | |
| D,Y | US-A-4 165 496 (BELL TELEPHONE LABORATORIES INC.) * Spalte 2, Zeilen 18-35,61-68; Spalte 3, Zeilen 30-32; Spalte 5, Zeilen 30-58; Figuren 1,6 * | 1-4 | |
| A | | 5-9 | |
| | --- | | **RECHERCHIERTE SACHGEBIETE (Int. Cl.4)** |
| D,Y | JOURNAL OF LIGHTWAVE TECHNOLOGY, Band LT-2, Nr. 5, Oktober 1984, Seiten 675-681, IEEE, New York, US; A. REICHELT et al.: "Wavelength-division multi demultiplexers for two-channel single-mode transmission systems" * Seite 675, Spalte 2, Zeilen 33-47; Seite 677, Spalte 1, Zeilen 1-4; Spalte 2, Zeilen 20-23; Figur 2 * | 1-4 | G 02 B 6/34<br>G 02 B 6/28<br>G 02 B 6/42 |
| A | Idem | 5-9 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 25-05-1987 | WESBY P.B. |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | FR-A-2 556 480 (LIGNES TELEGRAPHIQUES ET TELEPHONIQUES) * Insgesamt * | 1-4 | |

-----

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 25-05-1987 | WESBY P.B. |

EPA Form 1503 03 82